# EUROPEAN PATENT SPECIFICATION

(11) **EP 3 623 176 B1**
(45) Date of publication and mention of the grant of the patent: **31.08.2022**
(21) Application number: 18797903.4
(22) Date of filing: 24.04.2018
(51) Int. Cl.: B60C 9/22, B60C 5/14, B60C 9/08, B60C 9/18, B60C 19/00, B29D 30/16, B60C 9/20, B29D 30/00, B29D 30/08

(54) **PNEUMATIC TIRE**
LUFTREIFEN
PNEU

(30) Priority: 10.05.2017 JP 2017094211; 24.05.2017 JP 2017102693
(43) Date of publication of application: 18.03.2020
(73) Proprietor: Bridgestone Corporation, Tokyo 104-8340 (JP)
(72) Inventor: HASEGAWA, Keiichi, Tokyo 104-8340 (JP); KATAYAMA, Masahiro, Tokyo 104-8340 (JP); ARIMA, Masayuki, Tokyo 104-8340 (JP); KOUNO, Yoshihide, Tokyo 104-8340 (JP)
(74) Representative: Marks & Clerk LLP
(86) International application number: PCT/JP2018/016661
(87) International publication number: WO 2018/207617

(56) References cited:
- WO-A1-99/22951
- WO-A1-2008/065832
- WO-A1-2015/111314
- WO-A1-2015/165777
- WO-A1-2016/017508
- WO-A1-2016/017556
- WO-A1-2016/017556
- WO-A1-2016/084535
- WO-A1-2017/203765
- WO-A1-2018/074196
- JP-A- H0 478 603
- JP-A- 2002 331 806
- JP-A- 2007 099 068
- JP-A- 2014 210 487
- JP-A- 2015 016 834
- JP-A- 2016 097 945

## Description

### TECHNICAL FIELD

The present invention relates to a pneumatic tire provided with a belt that includes cords wound in a spiral shape.

### BACKGROUND ART

Japanese Patent Application Laid-Open (JP-A) Nos. 2013-244930 (Patent Document 1) and 2013-220741 (Patent Document 2) disclose pneumatic tires to be mounted to automobiles. These pneumatic tires ordinarily have a structure in which a belt with a multi-layer structure is provided at a tire radial direction outer side of a carcass, the multi-layer structure is provided with two or more angled belt plies that include cords that are angled relative to a tire circumferential direction, and a reinforcing layer that is disposed at the tire radial direction outer side of the angled belt plies.

Attention is also drawn to the disclosure of WO99/22951.

### SUMMARY OF INVENTION

### TECHNICAL PROBLEM

Because the pneumatic tires according to Patent Documents 1 and 2 are provided with two or more angled belt plies and a reinforcing layer, an in-plane shear stiffness and the like required for reinforcement of a crown portion of the carcass may be assured. However, because the number of layers of plies and reinforcing layers is large, reducing weight of the tire is difficult.

In recent years, there has been increasing need for reductions in weight of pneumatic tires, and there have been calls for pneumatic tires to meet this need.

In consideration of the circumstances described above, an object of the present invention is to provide a pneumatic tire that may both assure in-plane shear stiffness of a belt and reduce weight.

### SOLUTION TO PROBLEM

A pneumatic tire according to the present invention is as claimed in claim 1.

### ADVANTAGEOUS EFFECTS OF INVENTION

According to the pneumatic tire according to the present invention, both assurance of in-plane shear stiffness of the belt and a reduction in weight may be achieved.

### BRIEF DESCRIPTION OF DRAWINGS

Fig. 1 is a sectional diagram, cut along a tire turning axis, showing a pneumatic tire according to a first exemplary embodiment of the present invention.
Fig. 2 is a magnified sectional diagram showing a shoulder vicinity of the pneumatic tire according to the first exemplary embodiment.
Fig. 3 is a sectional perspective view showing a process of winding a resin-covered cord onto a belt shaping drum.
Fig. 4 is a magnified sectional diagram showing a shoulder vicinity of a pneumatic tire according to a second exemplary embodiment.
Fig. 5 is a magnified sectional diagram showing a shoulder vicinity of a pneumatic tire according to a third exemplary embodiment.
Fig. 6 is a magnified sectional diagram showing a shoulder vicinity of a pneumatic tire according to a variant example of the third exemplary embodiment.
Fig. 7A is a sectional diagram showing a resin-covered cord according to an alternative embodiment.
Fig. 7B is a sectional diagram showing a resin-covered cord according to an alternative embodiment.
Fig. 7C is a sectional diagram showing a resin-covered cord according to an alternative embodiment.
Fig. 7D is a sectional diagram showing a resin-covered cord according to an alternative embodiment.
Fig. 8 is a sectional diagram showing a pneumatic tire according to the present exemplary embodiments.
Fig. 9 is a magnified sectional diagram showing a pedestal portion formed of resin.
Fig. 10 is a sectional diagram showing a state in which an accessory component is attached to the pedestal portion.
Fig. 11A is a plan view showing structure of a tire inner face at which a penetrating portion is continuous in a tire circumferential direction.
Fig. 11B is a perspective view showing structure of a tire inner face at which resin does not fill in a penetrating hole.

### DETAILED DESCRIPTION

### = First Exemplary Embodiment =

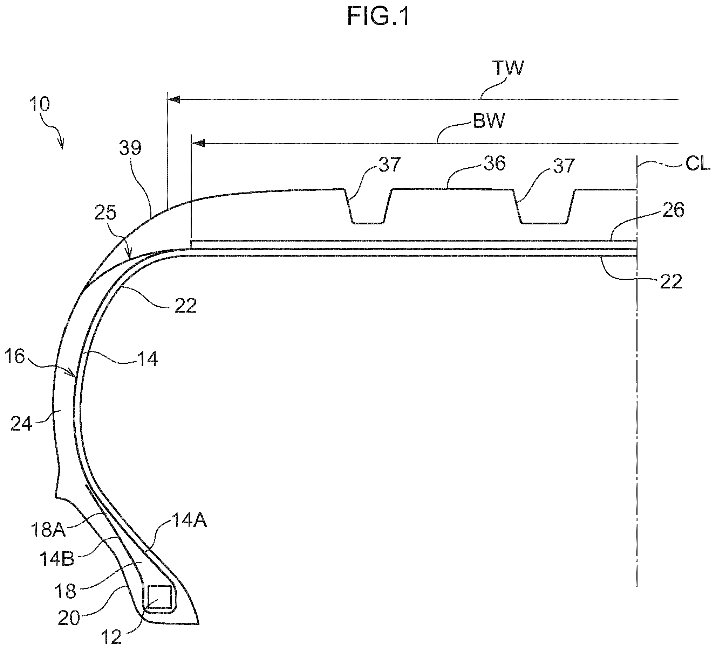

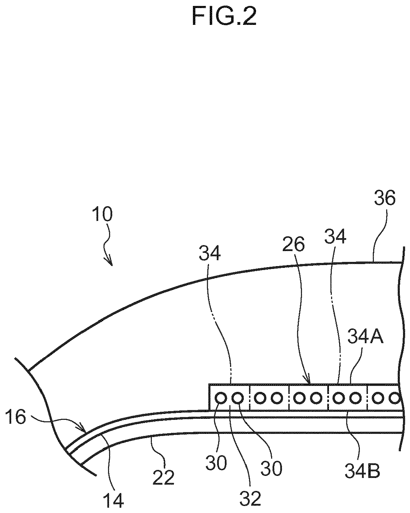

A pneumatic tire 10 according to the present exemplary embodiment is described using Fig. 1 and Fig. 2.

As shown in Fig. 1, the pneumatic tire 10 according to the present exemplary embodiment is, for example, what is known as a "radial tire" to be used at a car. The pneumatic tire 10 is provided with a pair of bead portions 20 in which bead cores 12 are embedded. A carcass 16 formed of a single-layer carcass ply 14 spans between one of the bead portions 20 and the other of the bead portions 20 . Fig. 1 shows a shape of the pneumatic tire 10 in a natural state prior to being filled with air.

The carcass ply 14 is formed by covering a plural number of cords (which are not shown in the drawing) that extend in a radial direction of the pneumatic tire 10 with a coating rubber (not shown in the drawings). Thus, the pneumatic tire 10 according to the present exemplary embodiment is a "radial tire". A material of the cords of the carcass ply 14 is, for example, PET but may be an alternative conventionally known material.

Tire width direction end portions of the carcass ply 14 are folded back toward the tire radial direction outer side around the bead cores 12. A portion of the carcass ply 14 that extends from the one bead core 12 to the other bead core 12 is referred to as a main body portion 14A, and portions of the carcass ply 14 that are folded back from the bead cores 12 are referred to as folded-back portions 14B.

A bead filler 18 whose thickness tapers toward the tire radial direction outer side from the bead core 12 is disposed between the main body portion 14A and each folded-back portion 14B. Portions of the pneumatic tire 10 at the tire radial direction inner side relative to tire radial direction outer side ends 18A of the bead fillers 18 serve as the bead portions 20.

An inner liner 22 formed of a rubber is disposed at the tire inner side of the carcass 16. A side rubber layer 24 formed of a first rubber material is disposed at the tire width direction outer side of the carcass 16.

In the present exemplary embodiment, a tire case 25 is constituted by the bead cores 12, the carcass 16, the bead fillers 18, the inner liner 22 and the side rubber layers 24. In other words, the tire case 25 is a tire frame member forming a frame of the pneumatic tire 10.

### - Belt -

A belt 26 is disposed at the outer side of a crown portion of the carcass 16, that is, at the tire radial direction outer side of the carcass 16. The belt 26 is in area contact with an outer peripheral face of the carcass 16. The belt 26 is formed by winding of a resin-covered cord 34. In the resin-covered cord 34, a plural number (two in the present exemplary embodiment) of reinforcing cords 30 are covered with a resin 32. A fabrication method of the belt 26 is described below.

It is preferable if the cords employed as the reinforcing cords 30 of the belt 26 are thicker and greater in strength (tensile strength) than the cords of the carcass ply 14. The reinforcing cords 30 of the belt 26 may be constituted of monofilaments (single fibers) of metal fiber, organic fiber or the like, or of multifilaments (twisted fibers) in which fibers are twisted. The reinforcing cords 30 according to the present exemplary embodiment are steel cords. The reinforcing cords 30 that are employed may be, for example, "1×5" steel cords with a diameter of 0.225 mm, and steel cords with alternative conventionally known constitutions may be employed.

The resin 32 that is employed to coat the reinforcing cords 30 is a resin material with a higher tensile modulus of elasticity than the first rubber material constituting the side rubber layer 24 and a second rubber material constituting a tread 36, which is described below. A thermoplastic resin featuring resilience, a thermoplastic elastomer (TPE), a thermosetting resin or the like may be employed as the resin 32 coating the reinforcing cords 30. With regard to resilience during running and moldability during fabrication, it is desirable to employ a thermoplastic elastomer.

As a thermoplastic elastomer, polyolefin-based thermoplastic elastomers (TPO), polystyrene-based thermoplastic elastomers (TPS), polyamide-based thermoplastic elastomers (TPA), polyurethane-based thermoplastic elastomers (TPU) polyester-based thermoplastic elastomers (TPC), dynamically vulcanized thermoplastic elastomers (TPV) and the like may be mentioned.

As a thermoplastic resin, polyurethane resins, polyolefin resins, vinyl chloride resins, polyamide resins and the like may be mentioned. For example, a thermoplastic resin material that may be employed has a deflection temperature under load as defined in ISO 75-2 or ASTM D648 (0.45 MPa load) of at least 78°C, a tensile yield strength as defined in JIS K7113 of at least 10 MPa, a tensile elongation at break as defined in JIS K7113 of at least 50%, and a Vicat softening temperature as defined in JIS K7206 (method A) of at least 130°C.

It is preferable if the tensile modulus of elasticity of the resin 32 covering the reinforcing cords 30 as defined in JIS K7113:1995 is at least 50 MPa. It is also preferable if an upper limit of the tensile modulus of elasticity of the resin 32 coating the reinforcing cords 30 is not more than 1000 MPa. It is particularly preferable if the tensile modulus of elasticity of the resin 32 covering the reinforcing cords 30 is within the range 200 to 500 MPa.

As illustrated in Fig. 1, a thickness dimension t of the belt 26 according to the present exemplary embodiment is preferably thicker than a diameter dimension of the reinforcing cords 30. That is, it is preferable if the reinforcing cords 30 are completely embedded in the resin 32. When the pneumatic tire 10 is for use on a car, it is preferable if the thickness dimension t of the belt 26 is at least 0.70 mm.

The tread 36 formed of the second rubber material is disposed at the tire radial direction outer side of the belt 26. The second rubber material that is employed for the tread 36 may be a conventional widely known rubber material. Grooves 37 for drainage are formed in the tread 36. A pattern of the tread 36 that is employed may be a conventional widely known pattern.

A width BW of the belt 26 measured along a tire axis direction is preferably at least 75% of a contact patch width TW of the tread 36 measured along the tire axis direction. A preferable upper limit of the width BW of the belt 26 is 110% of the contact patch width TW.

The contact patch width TW of the tread 36 is a region that is loaded in accordance with a maximum load performance when the pneumatic tire 10 is mounted to a standard rim complying with the JATMA YEAR BOOK (from the Japan Automobile Tire Manufacturers Association, 2016 edition), filled to an internal pressure of 100% of an air pressure (a maximum air pressure) corresponding with the maximum load performance (the bold-text load in the table of internal pressure against load performance) in the JATMA YEAR BOOK for the employed size and ply rating, and disposed such that the turning axis thereof is parallel with a horizontal plate in a stable state. A usage site or fabrication site complies with the respective standards when the TRA (Tire and Rim Association) standards and the ETRTO (European Tire and Rim Technical Organisation) standards are applied.

An in-plane shear stiffness of the belt 26 is preferably higher than an in-plane shear stiffness of a belt formed with a rubber covering.

### - Fabrication method of the pneumatic tire -

Now, an example of a fabrication method of the pneumatic tire 10 according to the present exemplary embodiment is described.

First, the unvulcanized tire case 25 is formed on an outer periphery of a publicly known tire shaping drum (not shown in the drawings). The tire case 25 is constituted by the inner liner 22 formed of rubber material, the bead cores 12, the bead fillers 18 formed of rubber material, the carcass ply 14 in which cords are covered with rubber material, and the side rubber layers 24. Fabrication methods up to this stage are conventional.

The belt 26 is formed by the resin-covered cord 34, in which two of the reinforcing cords 30 are covered with the resin 32 for covering (see the two-dot chain lines in Fig. 2), being wound in a spiral shape. A cross-sectional shape of the resin-covered cord 34 is rectangular (with a longer side in a lateral direction).

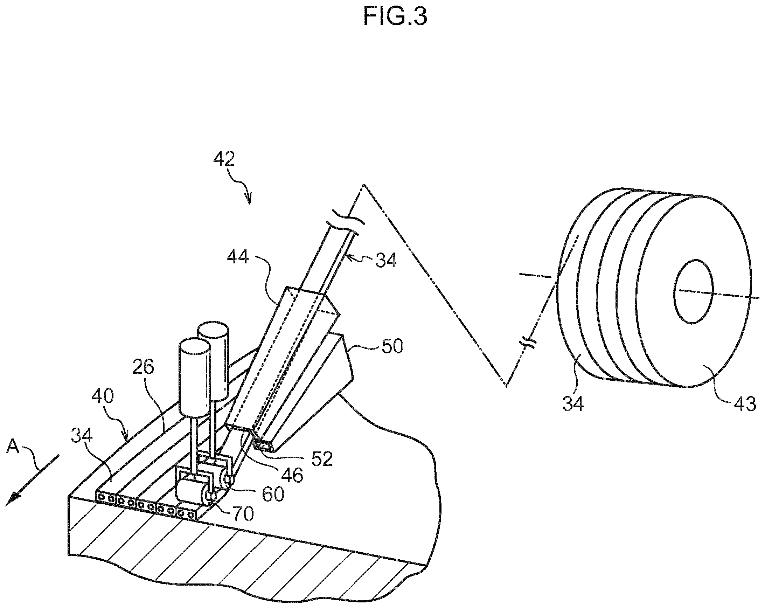

Below, an example of a fabrication process of the belt 26 is described with reference to Fig. 3.

First, a cord supply apparatus 42, a heating apparatus 50, a pressing roller 60 and a cooling roller 70 are movably disposed in a vicinity of a belt shaping drum 40.

The cord supply apparatus 42 includes a reel 43 and a guide member 44. The resin-covered cord 34 in which the reinforcing cords 30 are covered with the resin 32 is wound onto the reel 43. The resin-covered cord 34 is unwound from the reel 43 and the guide member 44 guides the resin-covered cord 34 onto an outer periphery of the belt shaping drum 40. The guide member 44 is formed in a tubular shape, through the inside of which the resin-covered cord 34 passes. An aperture portion 46 of the guide member 44 feeds out the resin-covered cord 34 toward an outer peripheral face of the belt shaping drum 40.

The heating apparatus 50 blows a hot wind against the resin-covered cord 34, causing blown against portions to heat up and fuse. In the present exemplary embodiment, air heated by an electric heating element (not shown in the drawings) is blown out from a blowing-out aperture 52 in an air current produced by a fan (not shown in the drawings), and this blown out hot wind is blown against the resin-covered cord 34. Structures of the heating apparatus 50 are not limited by the above description; any structure is applicable provided the structure is capable of heating and fusing a thermoplastic resin. For example, a structure that puts a heating iron into contact with a side face of the resin-covered cord 34 to heat and fuse the side face is applicable, a structure that heats and fuses with radiant heat is applicable, and a structure that irradiates infrared radiation to cause heating and fusion is applicable.

The pressing roller 60 presses the resin-covered cord 34, which is described below, against the outer peripheral face of the belt shaping drum 40, and is formed such that a pressing force F may be regulated. A roller surface of the pressing roller 60 has been processed to prevent adhesion to the resin material in the fused state thereof. The pressing roller 60 is freely rotatable. In the state in which the pressing roller 60 is pressing the resin-covered cord 34 against the outer periphery of the belt shaping drum 40, the pressing roller 60 passively rotates with a rotation direction of the belt shaping drum 40 (the direction of arrow A).

The cooling roller 70 is disposed at a rotation direction downstream side of the belt shaping drum 40 relative to the pressing roller 60. The cooling roller 70 presses the resin-covered cord 34 against the outer peripheral face of the belt shaping drum 40 while cooling the resin-covered cord 34. Similarly to the pressing roller 60, a pressing force of the cooling roller 70 may be adjusted, and a roller surface of the cooling roller 70 has been processed to prevent adhesion to the resin material in the fused state thereof. Also similarly to the pressing roller 60, the cooling roller 70 is freely rotatable. In the state in which the cooling roller 70 is pressing the resin-covered cord 34 against the outer peripheral face of the belt shaping drum 40, the cooling roller 70 passively rotates with the rotation direction of the belt shaping drum 40 (the direction of arrow A). The cooling roller 70 is structured such that a liquid (for example, water or the like) flows through an interior of the roller. A member in contact with the roller surface (in the present exemplary embodiment, the resin-covered cord 34) and the like may be cooled by heat exchange with this liquid. The cooling roller 70 may be omitted from a structure in which the resin material in the fused state is to cool naturally.

Hence, the belt shaping drum 40 is rotated in the direction of arrow A and the resin-covered cord 34 is fed from the aperture portion 46 of the cord supply apparatus 42 toward the outer peripheral face of the belt shaping drum 40.

While the hot wind is blowing toward the resin-covered cord 34 from the blowing-out aperture 52 of the heating apparatus 50, heating the resin-covered cord 34 and fusing the surface of the resin 32, the resin-covered cord 34 is adhered to the belt shaping drum 40 and the resin-covered cord 34 is pressed against the outer peripheral face of the belt shaping drum 40 by the pressing roller 60. A side portion of the resin-covered cord 34 is deformed by the pressing roller 60 so as to bulge out in the tire axis direction (squashing deformation), and side faces of the resin 32 that are adjacent in the tire axis direction come into contact and are welded together.

Thereafter, fused portions of the resin 32 come into contact with the cooling roller 70 and solidify. Thus, welding of the adjacent winding of the resin-covered cord 34 to one another is completed.

Thus, the belt 26 is formed at the outer peripheral face of the belt shaping drum 40 by the resin-covered cord 34 being wound onto the outer peripheral face of the belt shaping drum 40 in the spiral shape and pressed against the outer peripheral face. In order to wind the resin-covered cord 34 in the spiral shape, it is sufficient to move a position of the aperture portion 46 of the cord supply apparatus 42 in the tire axis direction in association with rotation of a tire case 17 or to move the tire case 17 in the tire axis direction.

Subsequently, the belt 26 in which the resin 32 has solidified is removed from the belt shaping drum and disposed at a radial direction outer side of a tire case at the tire shaping drum. The tire case is put under tension and the belt is pressure-joined to an outer peripheral face of the tire case; that is, an outer peripheral face of the carcass 16 is pressure-joined to an inner peripheral face of the belt 26.

Finally, similarly to an ordinary pneumatic tire, the unvulcanized tread 36 is affixed to an outer peripheral face of the belt 26, completing a green tire.

The green tire that is fabricated in this manner is vulcanization-molded in a vulcanizing mold in the same manner as an ordinary pneumatic tire, completing the pneumatic tire 10.

### - Operation and Effects -

Now, operation and effects of the pneumatic tire 10 according to the present exemplary embodiment are described.

In the pneumatic tire 10 according to the present exemplary embodiment, because the crown portion of the carcass 16 is reinforced by the belt 26 in which the reinforcing cords 30 wound in the spiral shape are covered with the resin 32, weight may be reduced compared to a belt of a conventional tire that is formed of plural layers structured with two or more layers of belt plies, and fabrication is simpler.

In the belt 26 according to the present exemplary embodiment, the tensile modulus of elasticity of the resin 32 covering the reinforcing cords 30 is at least 50 MPa, and the thickness of the belt 26 is assured of being at least 0.7 mm. Therefore, the in-plane shear stiffness of the belt 26 in the tire width direction may be thoroughly assured.

Because the in-plane shear stiffness of the belt 26 is assured, sufficient lateral force may be generated when a slip angle is applied to the pneumatic tire 10, steering stability may be assured, and responsiveness may be improved.

In addition, out-of-plane shear stiffness of the belt 26 is assured. Therefore, when a large lateral force is applied to the pneumatic tire 10, buckling of the tread 36 (a phenomenon in which the surface of the tread 36 undulates and a portion of the tread 36 separates from the ground) may be suppressed.

In the pneumatic tire 10 according to the present exemplary embodiment, because the belt 26 with high in-plane shear stiffness is employed and the width BW of the belt 26 is at least 75% of the contact patch width TW of the tread 36, stiffness of the vicinity of a shoulder 39 may be raised.

In the pneumatic tire 10 according to the present exemplary embodiment, because the belt 26 has a single-layer structure, thickness of the belt 26 may be reduced compared to a conventional structure with two or more belt plies. Thickness of the tread 36 may be increased by a corresponding amount, and depths of the grooves 37 may be increased. As a result, the lifetime of the pneumatic tire 10 may be prolonged.

In the belt 26 of the pneumatic tire 10, the reinforcing cords 30 are wound in the spiral shape and there are no regions of the circumference in which the reinforcing cords 30 are superposed in the tire radial direction. Thus, the thickness of the belt 26 is uniform in the tire circumferential direction, and uniformity of the pneumatic tire 10 is excellent.

If the thickness t of the belt 26, which is to say the thickness of the resin 32, were less than 0.7 mm, it might not be possible to make the reinforcing cords 30 embedded in the resin 32 thick and provide hoop stress performance.

If the thickness BW of the belt 26 were less than 75% of the contact patch width TW of the tread 36, hoop stress performance in the belt 26 might be insufficient, and it might be difficult to suppress the generation of noise in the vicinity of the shoulder 39. Alternatively, if the thickness BW of the belt 26 were greater than 100% of the contact patch width TW of the tread 36, hoop stress performance would plateau and the belt 26 would be wider than necessary, leading to an increase in weight of the pneumatic tire 10.

### = Second Exemplary Embodiment =

Now the pneumatic tire 10 is described in accordance with a second exemplary embodiment of the present invention. Structures that are the same as in the first exemplary embodiment are assigned the same reference numerals and are not described here.

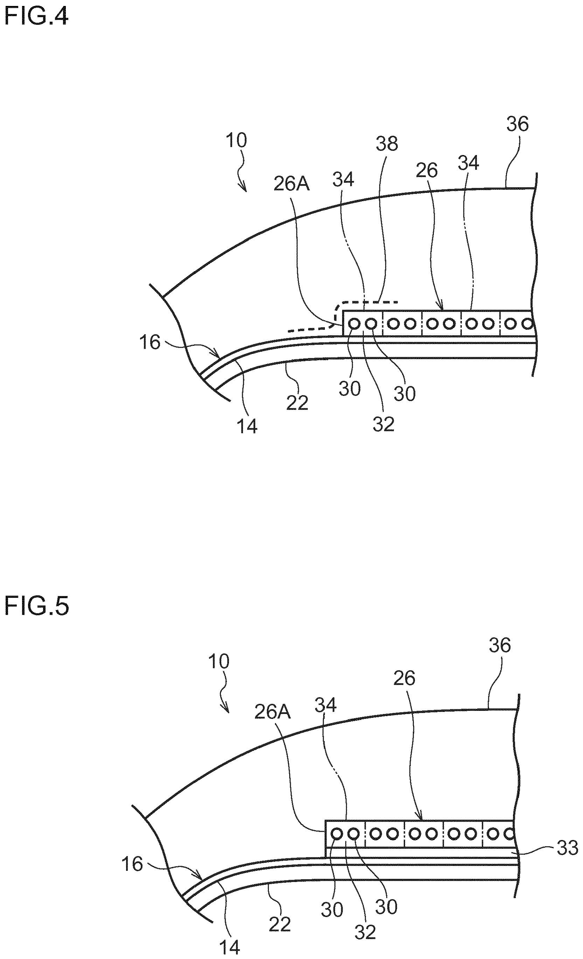

As shown in Fig. 4, in the pneumatic tire 10 according to the present exemplary embodiment, a vicinity of an end portion 26A of the belt 26 in the tire width direction is covered from the tire radial direction outer side by a belt-shaped layer 38. It is preferable if the layer 38 covers at least the tire width direction outermost side of the belt 26 from the tire radial direction outer side thereof. In the present exemplary embodiment, the reinforcing cords 30 are covered with the layer 38 to as far as the second of the reinforcing cords 30 from the tire width direction outermost side. The layer 38 covers the end portion 26A of the belt 26 from the tire width direction outer side and also extends from the end portion 26A of the belt 26 along the outer peripheral face of the carcass 16 to the tire width direction outer side, covering a portion of the outer peripheral face of the carcass 16. The layer 38 is joined to the belt 26 and the carcass 16.

The layer 38 that is employed is, for example, plural cords (not shown in the drawings) arrayed in parallel and coated with a rubber. The cords that are employed in the layer 38 may be, for example, organic fiber cords or steel cords. If steel cords are employed in the layer 38, the steel cords that are employed have lower flexural stiffness than the cords employed in the belt 26, that is, are thinner than the cords employed in the belt 26. The layer 38 may employ a woven material formed of fibers or the like or a nonwoven fabric instead of cords. Further, the layer 38 may employ cords, fibers or nonwoven fabric covered with a resin.

The layer 38 may be constituted of only a rubber material or resin material. In this case, the rubber material or resin material that is employed to constitute the layer 38 has a tensile modulus of elasticity between the tensile modulus of elasticity of the resin 32 covering the reinforcing cords 30 and the tensile moduluses of elasticity of the rubber material constituting the side rubber layer 24 and the second rubber material constituting the tread 36.

When a stiffness distribution in the tire width direction is viewed, there is a large step in stiffness between the belt 26 in which the reinforcing cords 30 are embedded and the tread 36 that is formed only of rubber; that is, there is a large difference in stiffness. Stress tends to concentrate in regions in which stiffness changes greatly, such as the vicinity of the end portion 26A of the belt 26 and the like. In the pneumatic tire 10 according to the present exemplary embodiment, because the end portion 26A of the belt 26 is covered by the layer 38, seen in the tire width direction, stiffness may be changed gradually from the end portion 26A of the belt 26 to the tread 36, and concentrations of stress in the vicinity of the end portion 26A may be inhibited.

In the present exemplary embodiment, only the vicinity of the end portion 26A of the belt 26 is covered with the layer 38 but, as required, the whole of the belt 26 may be covered from the tire radial direction outer side by one or more layers of the layer 38 formed over a wide range.

### = Third Exemplary Embodiment =

Now the pneumatic tire 10 is described in accordance with a third exemplary embodiment of the present invention. Structures that are the same as in the first exemplary embodiment are assigned the same reference numerals and are not described here.

As shown in Fig. 5, in the pneumatic tire 10 according to the present exemplary embodiment, a resin layer 33 that is formed only of a resin material is provided between the belt 26 and the carcass 16. The resin material constituting the resin layer 33 is joined with and integrated with the resin 32 of the belt 26 by welding.

In fabrication of the belt 26 according to the present exemplary embodiment, the resin layer 33 with a circular tube shape is disposed on the outer periphery of the belt shaping drum, the resin-covered cord 34 at which surfaces of the resin 32 are fused is wound onto the outer peripheral face of the resin layer 33 in the spiral shape, and the resin layer 33 may be joined with and made integral with the resin 32 of the resin-covered cord 34 by, for example, welding.

In the pneumatic tire 10 according to the present exemplary embodiment, because the resin layer 33 is integrated with the belt 26 and the resin region is thicker, the in-plane shear stiffness of the belt 26 may be raised further. In the belt 26 according to the first exemplary embodiment, the windings of the resin-covered cord 34 that are adjacent to one another are joined only by the side faces thereof being welded together. In the belt 26 according to the present exemplary embodiment, the windings of the resin-covered cord 34 that are adjacent to one another are joined by welding both via the respective side faces and via the resin layer 33, providing a higher joining strength.

As a resin material constituting the resin layer 33, the same resin material as the resin 32 of the belt 26 may be employed. Depending on circumstances, provided the resin layer 33 can be welded to the resin 32 of the belt 26, the resin layer 33 may employ a resin material of the same type as the resin 32 but with a different hardness or the resin layer 33 may employ a resin material of a different type from the resin 32.

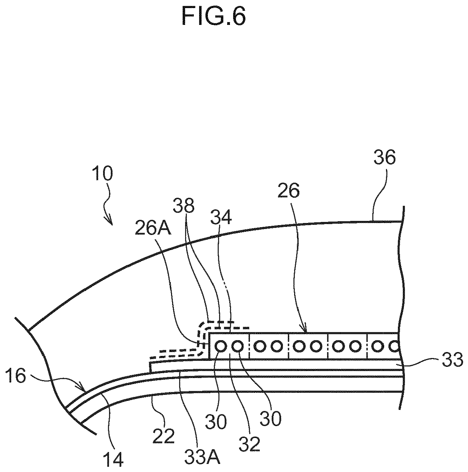

As shown in Fig. 6, the width of the resin layer 33 may form a projection portion 33A that extends beyond the width of the belt 26 in which the resin-covered cord 34 is wound in the spiral shape. According to this structure, stiffness of the belt 26 is lowered in a region that is formed only of resin at an end portion of the belt 26 formed of the high-stiffness resin-covered cord 34, which is likely to moderate a step in stiffness. The end portion 26A of the belt 26 and the projection portion 33A of the resin layer 33 may be covered by, for example, two layers of the layer 38.

The resin layer 33 according to the present exemplary embodiment may be formed by injection molding, may be formed by cutting an extrusion-molded circular resin tube to a predetermined length, and may be fabricated by any method provided the resin layer 33 can be formed as a circular resin tube.

In the present exemplary embodiment, because the resin-covered cord 34 is wound in the spiral shape on the outer peripheral face of the circular tube-shaped resin layer 33, in contrast to a case in which the resin-covered cord 34 is directly wound onto the outer peripheral face of a belt shaping drum, a reference point for winding to a determined width is provided. Therefore, winding of the resin-covered cord 34 is easier.

In the present exemplary embodiment, the belt 26 may be easily formed in a circular tube shape with excellent uniformity.

Relatedly, because the resin layer 33 is integrated with the belt 26 of the pneumatic tire 10 according to the present exemplary embodiment, out-of-plane flexural stiffness may be raised relative to the belt 26 of the pneumatic tire 10 according to the first exemplary embodiment, and a longitudinal spring constant of the pneumatic tire 10 may be raised. That is, the pneumatic tire 10 according to the first exemplary embodiment that includes the belt 26 without the resin layer 33 has a lower longitudinal spring constant than the pneumatic tire 10 according to the second exemplary embodiment, which is likely to improve riding comfort.

### = Fourth Exemplary Embodiment =

In the drawings, the direction of arrow C indicates the tire circumferential direction, the direction of arrow R indicates the tire radial direction, and the direction of arrow W indicates the tire width direction. The meaning of the term "tire radial direction" is intended to include directions orthogonal to the tire turning axis (not shown in the drawings). The meaning of the term "tire width direction" is intended to include a direction parallel to the tire turning axis. The term "tire width direction" may be substituted with the term "tire axis direction".

Methods of measuring dimensions of respective parts are the methods described in the 2016 edition of the JATMA YEAR BOOK. A usage site or fabrication site complies with the respective standards when the TRA standards and the ETRTO standards are applied.

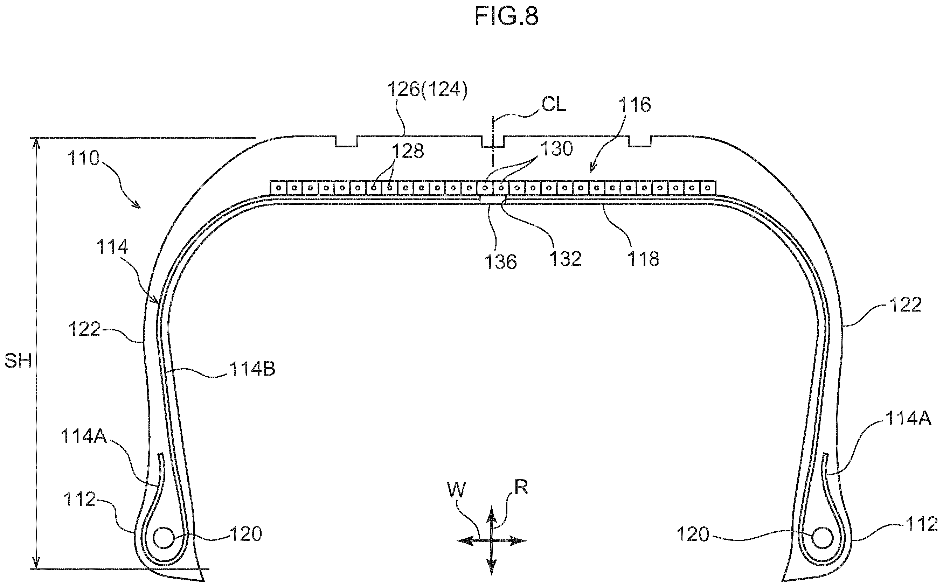

In Fig. 8, a pneumatic tire 110 according to the present exemplary embodiment includes a pair of bead portions 112, a carcass 114, a belt 116, and an inner liner 118.

A corresponding bead core 120 is embedded in each of the pair of bead portions 112. A metal, organic fiber, organic fiber covered with resin, hard resin or the like may be employed as a material constituting the bead core 120.

The carcass 114 spans between the pair of bead portions 112. End portions 114A of the carcass 114 are anchored at the bead cores 120. A carcass main body portion 114B of the carcass 114 that is disposed between the end portions 114A passes along side portions 122 and a crown portion 124. In the present exemplary embodiment, regions of the pneumatic tire 110 up to 30% of a section height SH of the pneumatic tire 110 from the tire radial direction inner side end thereof are referred to as the bead portions 112, and a region of the pneumatic tire 110 at which a tread 126 is disposed is referred to as the crown portion 124.

The belt 116 is provided at the tire radial direction outer side of the carcass main body portion 114B of the carcass 114. A cord 128 of the belt 116 is covered by a resin 130. The belt 116 is formed by the cord 128 covered with the resin 130 being wound in the tire circumferential direction onto the outer periphery of the carcass 114, in a spiral shape, and joined to the carcass 114. Windings of the resin 130 that are adjacent to one another in the tire axis direction are joined to one another. The cord 128 that is employed in the belt 116 may be, for example, a steel cord. The tread 126 is joined to the tire radial direction outer side of the belt 116. A material that is employed for the resin 130 may be the same material as the resin 32 according to the first exemplary embodiment.

The inner liner 118 is provided at the tire radial direction inner side of the carcass 114. The inner liner 118 is a member fabricated of rubber for retaining internal pressure. The inner liner 118 structures substantially the whole of an inner face of the tire except for a penetrating portion 132, which is described below.

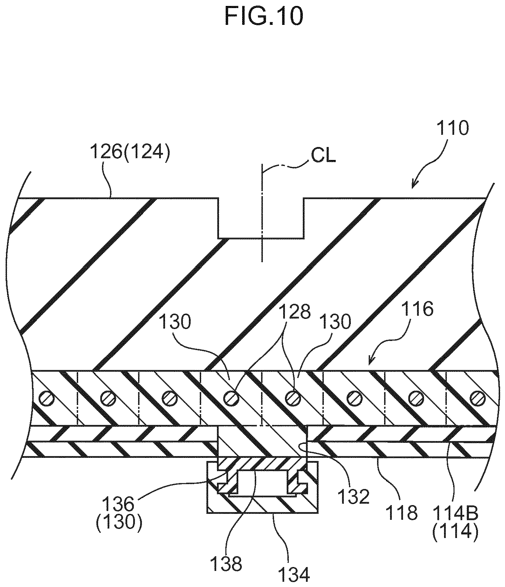

As shown in Fig. 8 to Fig. 10, the resin 130 of the belt 116 is exposed at the tire inner side thereof through the penetrating portion 132, which penetrates the carcass 114 and the inner liner 118. The penetrating portion 132 is a circular penetrating hole provided at, for example, a location corresponding with a tire equatorial plane CL. The resin 130 that is exposed through the penetrating portion 132 structures a portion of the tire inner face, regardless of whether or not the resin 130 fills in the penetrating portion 132. An accessory component 134 (Fig. 10) is structured to be mountable to the resin 130 that is exposed at the tire inner side. The accessory component 134 is an acceleration sensor, a temperature sensor, a microphone, a transmitter or the like.

In the example illustrated in Fig. 8 to Fig. 10, the resin 130 of the belt 116 fills in an interior of the penetrating portion 132 and forms a pedestal portion 136 for mounting of the accessory component 134 (Fig. 10). The accessory component 134 (Fig. 10) is mountable to the pedestal portion 136. The pedestal portion 136 is formed by, for example, a portion of the resin 130 being fused, filling in the penetrating portion 132 and solidifying. Alternatively, the pedestal portion 136 may be formed by inserting a separate resin member into the penetrating portion 132 and adhering the separate resin member to the resin 130 of the belt 116. The pedestal portion 136 is coplanar with a surface of the inner liner 118, but this is not limiting; the pedestal portion 136 may be recessed into the penetrating portion 132. That is, the resin 130 may fill in to partway through the penetrating portion 132.

### - Operation -

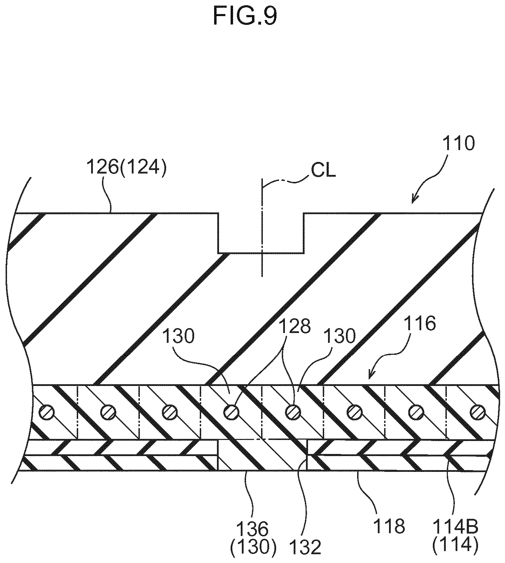

The present exemplary embodiment is structured as described above and operations thereof are described below. In Fig. 9, in the pneumatic tire 110 according to the present exemplary embodiment, the resin 130 covering the cord 128 of the belt 116 passes through the penetrating portion 132 penetrating the carcass 114 and the inner liner 118, and the resin 130 is exposed at the tire inner side. Even though the penetrating portion 132 is provided, airtightness of the tire is maintained by the resin 130. Adhesion, welding or the like to the resin 130 is easier than adhesion, welding or the like to the inner liner 118 fabricated of rubber, at the surface of which a mold release agent containing silicone remains.

In this example, because the pedestal portion 136 is formed by the resin 130 filling in the penetrating portion 132 to be coplanar with, for example, the surface of the inner liner 118, mounting of the accessory component 134 is easy. In the example shown in Fig. 10, a mounting member 138 is fixed to the pedestal portion 136 by a technique such as adhesion, welding or the like. The accessory component 134 is anchored to the mounting member 138 and fixed at the tire inner face.

If the penetrating portion 132 is a penetrating hole, a mounting position of the accessory component 134 may be accurately specified by a position at which the resin 130 is exposed at the tire inner side being specified.

JP-A No. 2016-34801 (Patent Document 3) discloses a structure of a pneumatic tire in which a mechanical fastener is disposed at a tire inner face and various objects may be mounted at the tire inner face via the mechanical fastener. The mechanical fastener is formed of a resin reinforcement body sandwiched by two or more fastener structural members. The resin reinforcement body is adhered by vulcanization to the tire inner face, or is fixed to the tire inner face via an adhesive layer at a boundary between the resin reinforcement body and the tire inner face. However, because the resin reinforcement body is employed in this conventional example, the number of components is increased and costs are raised.

In the present exemplary embodiment, because the resin 130 is exposed at the tire inner side, the accessory component 134 may be directly mounted to the tire inner side and an increase in the number of components is restrained. Furthermore, productivity may be improved. Because a mounted state of the accessory component 134 is stable, falling of the accessory component 134 may be prevented.

A range of functions may be provided to the pneumatic tire 110 by mounting the accessory component 134 at the exposed resin.

### - Alternative Embodiments -

Hereabove, exemplary embodiments of the present invention have been described. The present invention is not limited by these descriptions and it will be clear that numerous modifications beyond these descriptions may be embodied within a technical scope not departing from the gist of the invention.

The belt 26 according to the exemplary embodiments described above is formed with a constant diameter and constant thickness over the tire axis direction. That is, seen in a sectional view cut along the tire axis, the belt 26 has a straight linear shape, but this is not limiting. The outer diameter of a tire width direction central portion of the belt may be greater than outer diameters of both tire width direction end portions of the belt and, when viewed in the section cut along the tire axis direction, the belt may form a circular arc shape in which the tire width direction central portion forms a protrusion toward the tire radial direction outer side.

In the exemplary embodiments described above, the resin-covered cord 34 employed when the belt 26 is being fabricated is the two reinforcing cords 30 covered with the resin 32. However, the resin-covered cord 34 may be a single reinforcing cord 30 covered with the resin 32, and may be three or more of the reinforcing cords 30 covered with the resin 32.

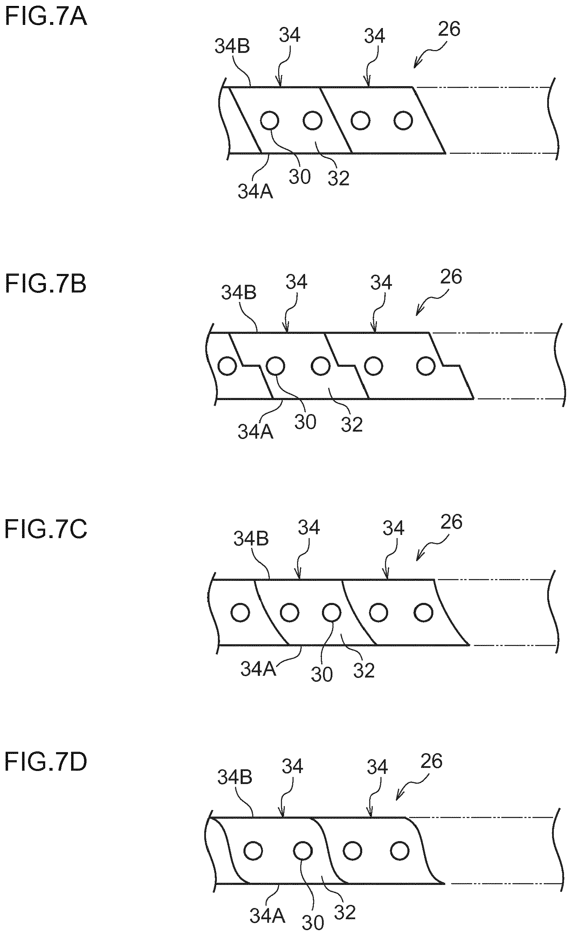

A cross-sectional shape of the resin-covered cord 34 according to the exemplary embodiments described above is a rectangle. As shown in Fig. 2, an inner peripheral face 34A at the side of the resin-covered cord 34 that is closer to the carcass 16 (the lower side in the drawing) and an outer peripheral face 34B at the side of the resin-covered cord 34 that is closer to the tread 36 (the upper side in the drawing) are not offset in the belt width direction. However, the cross-sectional shape of the resin-covered cord 34 is not limited to a rectangle. As shown in Fig. 7A, Fig. 7B, Fig. 7C and Fig. 7D, the inner peripheral face 34A at the side closer to the carcass (the lower side in the drawings) and the outer peripheral face 34B at the side that is closer to the tread (the upper side in the drawings) may be offset in the belt width direction.

The cross-sectional shape of the resin-covered cord 34 shown in Fig. 7A is a parallelogram, the side faces of which are inclined at constant angles. The side faces of the resin-covered cord 34 shown in Fig. 7B are inclined and step portions are formed at central portions of the side faces. The side faces of the resin-covered cord 34 shown in Fig. 7C have circular arc shapes. The side faces of the resin-covered cord 34 shown in Fig. 7D are curved in reverse "S" shapes.

In the resin-covered cords 34 shown in Fig. 7A to Fig. 7D, the lengths of the side faces as seen in the sectional views are all longer than the side faces of the resin-covered cord 34 with the rectangular cross section shown in Fig. 2. Thus, joining areas (welding areas) between one winding of the resin-covered cords 34 and another winding of the resin-covered cords 34 that are adjacent in the belt width direction may be made longer than in the belt 26 shown in Fig. 2 and joining strength may be raised.

The belt 26 according to the present exemplary embodiments is not limited to ordinary pneumatic tires but may be employed in run-flat tires in which side portions are reinforced with reinforcing rubber.

In the belt 26 according to the present exemplary embodiment, the side faces of the resin-covered cord 34 that are adjacent in the belt width direction are joined to one another in the tire width direction by welding, but may be joined using an adhesive. Moreover, in the third exemplary embodiment, the resin layer 33 and the resin 32 of the belt 26 are joined by welding, but may be joined using an adhesive.

In Fig. 8 to Fig. 10, the penetrating portion 132 is a circular penetrating hole, but this is not limiting. For example, the penetrating portion 132 may be a penetrating hole with an elliptical shape, a polygonal shape or the like.

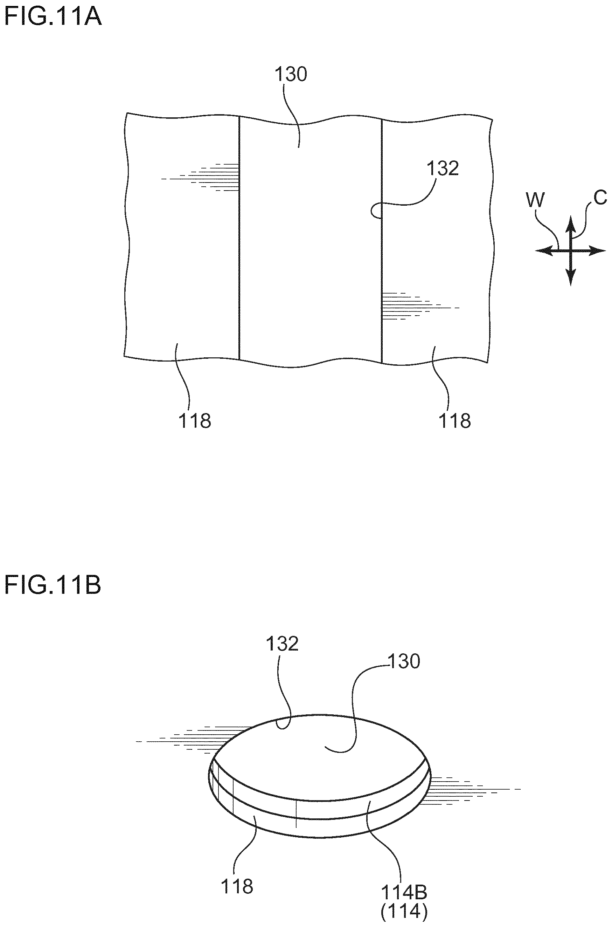

In an example shown in Fig. 11A, the penetrating portion 132 is continuous in the tire circumferential direction. In this structure, the penetrating portion 132 may be continuous over the whole circumference in the tire circumferential direction, may extend in a certain region, or may be formed intermittently. Because the penetrating portion 132 is continuous in the tire circumferential direction, the resin 130 of the belt 116 is exposed continuously in the tire circumferential direction. Therefore, the accessory component 134 (Fig. 10) may be mounted within a long range in the tire circumferential direction.

The continuous penetrating portion 132 may be provided together with the penetrating portion 132 (penetrating hole) shown in Fig. 9.

The pedestal portion 136 is formed by the resin 130 filling in the penetrating portion 132. However, as shown in Fig. 11B, a structure is possible in which the resin 130 does not fill in the penetrating portion 132 but is exposed at the tire inner side thereof through the penetrating portion 132.

The location of the penetrating portion 132 is not limited to positions at the tire equatorial plane CL. The location of the penetrating portion 132 may be suitably provided, with consideration for stiffness balance of the pneumatic tire 110 and the like, at any position at which the resin 130 of the belt 116 can be exposed, for example, at the inner side of the crown portion 124.

## Claims

1. A pneumatic tire (10), comprising:
a tire case (25) including a carcass (16) that extends from one bead portion (20) to another bead portion (20), at least an outer side portion, in a tire width direction, of the carcass being covered with a first rubber material;
a tread (36) disposed at a tire radial direction outer side of the tire case, the tread being formed of a second rubber material; and
a single-layer belt (26) disposed between the tire case and the tread, the belt comprising a resin-covered cord (34) that is wound in a spiral shape, the resin-covered cord comprising a cord covered with a resin (32) with a greater tensile modulus of elasticity than the first rubber material and the second rubber material, and the resin at one winding of the resin-covered cord being integrally joined with the resin at another winding of the resin-covered cord, the one winding and the another winding being adjacent in the tire width direction, as seen in a tire width direction sectional view, **characterized in that**:
an inner peripheral face (34A) of the resin-covered cords at a side thereof at which the carcass is disposed and an outer peripheral face (34B) of the resin-covered cords at a side thereof at which the tread is disposed are offset in a belt width direction.

2. The pneumatic tire according to claim 1, further comprising a layer (38) covering an end portion of the belt, the layer including fibers or cords.

3. The pneumatic tire according to claim 1 or 2, further comprising a resin layer (33) disposed at an inner peripheral face, in the tire radial direction, of the belt, the resin layer being formed from another resin with a greater tensile modulus of elasticity than the first rubber material and the second rubber material,
wherein the resin layer is integrally joined with the resin covering the cord.

4. The pneumatic tire according to any one of claims 1 to 3, wherein a width of the belt measured along the tire width direction is at least 75% of a contact patch width (TW) of the tread,
wherein the contact patch width TW of the tread is a region that is loaded in accordance with a maximum load performance when the pneumatic tire is mounted to a standard rim complying with the JATMA YEAR BOOK, filled to an internal pressure of 100% of an air pressure, which is a maximum air pressure corresponding with the maximum load performance in the JATMA YEAR BOOK for the employed size and ply rating, and disposed such that the turning axis thereof is parallel with a horizontal plate in a stable state.

5. The pneumatic tire according to claim 1, further comprising an inner liner (22, 118) fabricated of rubber that is provided at an inner side, in the tire radial direction, of the carcass, the inner liner retaining internal pressure,
wherein the resin of the belt is exposed at a tire inner side thereof through a penetrating portion (132) that penetrates the carcass and the inner liner, and the resin is structured to enable mounting of an accessory component to the exposed resin.

6. The pneumatic tire according to claim 5, wherein the resin of the belt fills in an interior of the penetrating portion and forms a pedestal portion (136) at which the accessory component is to be mounted.

7. The pneumatic tire according to claim 5 or claim 6, wherein the penetrating portion is a penetrating hole.

8. The pneumatic tire according to claim 5 or claim 6, wherein the penetrating portion is continuous in a tire circumferential direction.

9. The pneumatic tire according to any one of claims 5 to 8, comprising the accessory component mounted at the exposed resin.

## Patentansprüche

1. Luftreifen (10), der Folgendes umfasst:
eine Reifendecke (25), die eine Karkasse (16) einschließt, die sich von einem Wulstabschnitt (20) bis zu einem anderen Wulstabschnitt (20) erstreckt, wobei mindestens ein äußerer Seitenabschnitt, in einer Reifenbreitenrichtung, der Karkasse mit einem ersten Gummimaterial bedeckt ist,
eine Lauffläche (36), die an einer in Reifenradialrichtung äußeren Seite der Reifendecke angeordnet ist, wobei die Lauffläche aus einem zweiten Gummimaterial geformt ist, und
einen einlagigen Gürtel (26), der zwischen der Reifendecke und der Lauffläche angeordnet ist, wobei der Gürtel einen harzüberzogenen Kord (34) umfasst, der in einer spiraligen Form gewunden ist, wobei der harzüberzogene Kord einen Kord umfasst, der mit einem Harz (32) mit einem größeren Zugelastizitätsmodul als das erste Gummimaterial und das zweite Gummimaterial überzogen ist und das Harz an einer Windung des harzüberzogenen Kords integral mit dem Harz an einer anderen Windung des harzüberzogenen Kords verbunden ist, wobei die eine Windung und die andere Windung in der Reifenbreitenrichtung, gesehen in einer Schnittansicht in Reifenbreitenrichtung, benachbart sind, **dadurch gekennzeichnet, dass**:
eine innere Umfangsfläche (34A) der harzüberzogenen Kords an einer Seite derselben, an der die Karkasse angeordnet ist, und eine äußere Umfangsfläche (34B) der harzüberzogenen Kords an einer Seite derselben, an der die Lauffläche angeordnet ist, in einer Gürtelbreitenrichtung versetzt sind.

2. Luftreifen nach Anspruch 1, der ferner eine Lage (38) umfasst, die einen Endabschnitt des Gürtels bedeckt, wobei die Lage Fasern oder Kords einschließt.

3. Luftreifen nach Anspruch 1 oder 2, der ferner eine Harzlage (33) umfasst, die an einer inneren Umfangsfläche, in der Reifenradialrichtung, des Gürtels angeordnet ist, wobei die Harzlage aus einem anderen Harz mit einem größeren Zugelastizitätsmodul als das erste Gummimaterial und das zweite Gummimaterial geformt ist,
wobei die Harzlage integral mit dem Harz, das den Kord überzieht, verbunden ist.

4. Luftreifen nach einem der Ansprüche 1 bis 3, wobei eine Breite des Gürtels, gemessen entlang der Reifenbreitenrichtung, mindestens 75 % einer Aufstandsflächenbreite (TW) der Lauffläche beträgt,
wobei die Aufstandsflächenbreite TW der Lauffläche ein Bereich ist, der entsprechend einer maximalen Belastungsleistung belastet wird, wenn der Luftreifen auf einer standardmäßigen Felge in Übereistimmung mit dem JATMA-Jahrbuch montiert ist, bis zu einem Innendruck von 100 % eines Luftdrucks, der ein maximaler Luftdruck ist, welcher der maximalen Belastungsleistung in dem JATMA-Jahrbuch für die eingesetzte Größe und das Ply-Rating entspricht, gefüllt ist und derart angeordnet ist, dass die Drehachse desselben in einem stabilen Zustand parallel zu einer horizontalen Platte ist.

5. Luftreifen nach Anspruch 1, der ferner eine aus Gummi gefertigte innere Auskleidung (22, 118) umfasst, die an einer inneren Seite, in der Reifenradialrichtung, der Karkasse bereitgestellt wird, wobei die innere Auskleidung den Innendruck hält,
wobei das Harz des Gürtels an einer Reifeninnenseite desselben durch einen hindurchdringenden Abschnitt (132) freigelegt wird, der die Karkasse und die innere Auskleidung durchdringt, und das Harz so strukturiert ist, dass das Anbringen einer zusätzlichen Komponente an dem freigelegten Harz ermöglicht wird.

6. Luftreifen nach Anspruch 5, wobei das Harz des Gürtels ein Inneres des hindurchdringenden Abschnitts ausfüllt und einen Sockelabschnitt (136) bildet, an dem die zusätzliche Komponente angebracht werden soll.

7. Luftreifen nach Anspruch 5 oder Anspruch 6, wobei der hindurchdringende Abschnitt ein hindurchdringendes Loch ist.

8. Luftreifen nach Anspruch 5 oder Anspruch 6, wobei der hindurchdringende Abschnitt in einer Reifenumfangsrichtung durchgehend ist.

9. Luftreifen nach einem der Ansprüche 5 bis 8, der die zusätzliche Komponente umfasst, die an dem freigelegten Harz angebracht ist.

## Revendications

1. Bandage pneumatique (10), comprenant :
une enveloppe de pneu (25) incluant une carcasse (16) qui s'étend d'une partie de talon (20) vers une autre partie de talon (20), au moins une partie latérale externe, dans la direction de la largeur du bandage pneumatique, de la carcasse étant recouverte par un premier matériau de caoutchouc ;
une bande de roulement (36) disposée au niveau d'un côté externe, dans la direction radiale du bandage pneumatique, de l'enveloppe de pneu, la bande de roulement étant formée à partir d'un deuxième matériau de caoutchouc ; et
une ceinture monocouche (26) disposée entre l'enveloppe de pneu et la bande de roulement, la ceinture comprenant un câblé recouvert de résine (34) enroulé en une forme en spirale, le câblé recouvert de résine comprenant un câblé recouvert d'une résine (32) présentant un module d'élasticité en traction supérieur à celui du premier matériau de caoutchouc et du deuxième matériau de caoutchouc, et la résine au niveau d'un enroulement du câblé recouvert de résine étant reliée intégralement à la résine au niveau d'un autre enroulement du câblé recouvert de résine, ladite une spire et ladite autre spire étant adjacentes dans la direction de la largeur du bandage pneumatique, vu dans une vue en coupe dans la direction de la largeur du bandage pneumatique, **caractérisé en ce que** :
une face périphérique interne (34A) des câblés recouverts de résine, au niveau de leur côté où est disposée la carcasse, et une face périphérique externe (34B) des câblés recouverts de résine au niveau de leur côté où est disposée la bande de roulement, sont décalées dans une direction de la largeur de la ceinture.

2. Bandage pneumatique selon la revendication 1, comprenant en outre une couche (38) recouvrant une partie d'extrémité de la ceinture, la couche incluant des fibres ou des câblés.

3. Bandage pneumatique selon les revendications 1 ou 2, comprenant en outre une couche de résine (33) disposée au niveau d'une face périphérique interne, dans la direction radiale du bandage pneumatique, de la ceinture, la couche de résine étant formée à partir d'une autre résine présentant un module d'élasticité en traction supérieur à celui du premier matériau de caoutchouc et du deuxième matériau de caoutchouc ;
dans lequel la couche de résine est reliée intégralement à la résine recouvrant le câblé.

4. Bandage pneumatique selon l'une quelconque des revendications 1 à 3, dans lequel une largeur de la ceinture, mesurée le long de la direction de la largeur du bandage pneumatique, représente au moins 75% d'une largeur de la zone de contact (TW) de la bande de roulement. ;
dans lequel la largeur de la zone de contact TW de la bande de roulement est une région chargée en fonction d'une performance de charge maximale lorsque le bandage pneumatique est monté sur une jante standard selon le JATMA YEAR BOOK, rempli à une pression interne de 100% d'une pression d'air, qui constitue une pression d'air maximale correspondant à la performance de charge maximale dans le JATMA YEAR BOOK pour la taille utilisée et l'indice de robustesse, et disposée de sorte que son axe de rotation est parallèle à une plaque horizontale dans un état stable.

5. Bandage pneumatique selon la revendication 1, comprenant en outre une gomme intérieure (22, 118) fabriquée à partir de caoutchouc qui est disposé au niveau d'un côté interne, dans la direction radiale du bandage pneumatique, de la carcasse, la gomme intérieure retenant la pression interne ;
dans lequel la résine de la ceinture est exposée au niveau d'un côté interne du bandage pneumatique, à travers une partie de pénétration (132) qui pénètre dans la carcasse et la gomme intérieure, et la résine est structurée de sorte à permettre le montage d'un composant accessoire sur la résine exposée.

6. Bandage pneumatique selon la revendication 5, dans lequel la résine de la ceinture remplit un intérieur de la partie de pénétration et forme une partie de socle (136) au niveau de laquelle le composant accessoire doit être monté.

7. Bandage pneumatique selon les revendications 5 ou 6, dans lequel la partie de pénétration est un trou de pénétration.

8. Bandage pneumatique selon les revendications 5 ou 6, dans lequel la partie de pénétration est continue dans la direction circonférentielle du bandage pneumatique.

9. Bandage pneumatique selon l'une quelconque des revendications 5 à 8, comprenant le composant accessoire monté au niveau de la résine exposée.
